# EUROPEAN PATENT SPECIFICATION

(11) **EP 3 538 756 B1**
(45) Date of publication and mention of the grant of the patent: **07.10.2020**
(21) Application number: 17866383.7
(22) Date of filing: 13.11.2017
(51) Int. Cl.: F03B 13/20, F03B 13/18

(54) **SUBMERGED HEAVING WAVE ENERGY CONVERTER**
GETAUCHTER WELLENENERGIEWANDLER
CONVERTISSEUR D'ÉNERGIE HOULOMOTRICE IMMERGÉ

(30) Priority: 12.11.2016 GB 201619186
(43) Date of publication of application: 18.09.2019
(73) Proprietor: Aqua Power Technologies Limited, Grange-Over-Sands, Cumbria LA11 7PT (GB)
(72) Inventor: ETHERINGTON, Samuel Devon, Ings Cumbria LA11 7PT (GB)
(74) Representative: Murgitroyd & Company
(86) International application number: PCT/GB2017/053411
(87) International publication number: WO 2018/087571

(56) References cited:
- WO-A1-2012/001646
- WO-A1-2016/120599
- DE-A1- 19 932 004
- JP-A- H0 610 822
- US-A- 889 153

## Description

This disclosure relates to wave energy converters, which are machines that convert the energy from waves into another form such as, for example, electrical energy. This disclosure in a preferred embodiment relates to a wave energy converter including a floating structure and a submerged element.

In the drive to shift energy dependency away from fossil fuels and towards renewable energy, wave energy is being actively assessed. A number of wave energy converters are under test or in operation. A number of devices in development are envisaged to be grid connected devices and as a result are relatively large devices and not economically feasible outside of the grid connected market. However, there are a number of sectors where small scale wave energy converters have applications, which are superior to the performance of current power solutions, such as solar.

WIPO publication number WO 2016/120599 A1 describes a submerged element, a heave plate, that comprises of a number of radially arranged flaps such that the heave plate can deform and change shape depending on the direction and the force of the hydrodynamic loading. When exposed to waves, the heave plate is designed to create a drag or damping force which actuates other operable members. In high loading situations, the pivoting flaps open to dissipate excess drag. The radially arranged flaps are pivoted about an offset beam from the heave plates central origin, and the flaps distal end is tapered and of less surface area than the pivoting end.

DE19932004 A1 describes a wave-driven power producing machine. The power producing machine consists of a pontoon on the water surface, following the crests and troughs of the waves, with a connecting rod on it. There is an energy creating unit) on the lower end of the rod. This consists of one or more bladed wheels. The blades are rotated about an axis, which also serves as the rotation axis of a generator on or in the connecting rod.

According to a first aspect, there is provided a wave energy converter comprising:
a buoyant structure which, in use, floats on water;
a submerged element tethered to a buoyant structure so as to be tethered, in use, underneath the buoyant structure such that it moves below the surface of the water in phase with the floating buoyant structure;
the submerged element comprising a generator and for example with a generator on board;
the submerged element with a generator drive mechanism associated with the generator, the generator drive mechanism comprising a transmission drive and a rotational input shaft and for example having at least one pulley transmission, at least one pulley, at least one biasing element, and a rotational input drive shaft;
the submerged element with a drive member system operably connected to the input drive shaft via the generator drive mechanism and for example via a pulley transmission drive, the drive member being moveable for example pivotably back and forth between a first position and a second position;
the submerged element with a biasing arrangement comprising at least one biasing element acting on the drive member;
   wherein, in use, when the buoyant structure encounters a wave crest, the spacing between the buoyant structure and the distal end of the drive member increases and the drive member is hydro dynamically forced down towards the second position, and, when the buoyant structure encounters a wave trough, the spacing between the buoyant structure and the distal end of the submerged drive member decreases and the drive member is urged towards the first position by the biasing arrangement; and,
wherein the back and forth movement of the drive member between the first and second positions causes the generator drive mechanism to engage and rotate the input drive shaft and, thereby, causes a coupled generator shaft to rotate.

The invention is characterised in that:
the converter is configured in such manner that, during use with the wave energy converter deployed in a body of water in a hydrodynamically unloaded condition with the buoyant structure and the submerged element relatively at rest, the drive member(s) are positioned generally parallel to the bed of the body of water; and in that:
each drive member is elongate in two dimensions and has one elongate edge pivoting about the submerged element structure and pivotably moveable between the first and second positions around an axis which is, or is parallel to, the rotational axis of the input drive shaft.

Thus, the wave energy converter is configured, and in particular the buoyant structure and the submerged element are tethered together, in such manner that during use, as the floating buoyant structure encounters successive wave crests and troughs, the spacing between the buoyant structure and the distal end of the drive member successively increases and decreases in the manner above described, producing a back and forth movement of the drive member between the first and second positions which drives the generator on the submerged element. The generator is suitably configured such that a back and forth movement of the drive member between the first and second positions drives the generator and in particular does so by causing the generator drive mechanism to engage and rotate the input drive shaft and, thereby, causing a coupled generator shaft to rotate.

The wave energy converter may comprise a plurality of drive members. In a possible embodiment the wave energy converter may comprise a pair of drive members, and for example a pair of symmetrically disposed drive members.

The wave energy converter is configured, and in particular the buoyant structure and the submerged element are tethered together, in such manner that, during use with the wave energy converter deployed in a body of water in a hydrodynamically unloaded condition (such as a calm sea) with the buoyant structure and the submerged element relatively at rest, the drive member or drive members are positioned generally parallel to the bed of the body of water.

Preferably the drive members comprise or define a large surface area disposed in the plane parallel to the bed of the body of water. Each drive member is elongate in two dimensions, that is, having an elongate or extended length and an elongate or extended width. For example each drive member is generally rectangular. Suitable drive members include flaps.

In accordance with the invention each drive member is elongate in two dimensions and has one elongate edge pivoting about the submerged element structure and pivotably moveable between the first and second positions around an axis which is, or is parallel to, the rotational axis of the input drive shaft.

In a convenient each arrangement the generator drive mechanism is attached at or near another edge of the drive member such as a distal edge for example being an opposite edge of a generally rectangular drive member.

The drive member may be a flap member extending from a first end which the member is pivotable around the said axis so that a second end of the flap distal from the first end is movable between the first and second positions as the first end pivots around the said axis. For example the flap member may have one end fastened to a hinge mechanism and the distal end operably connected to the input drive shaft so that the flap member is pivotably movable between the first and second positions and around an axis which is, or is parallel to, the rotational axis of the input drive shaft. In a possible embodiment the flap member extends from a fist end and is pivotable around said hinge mechanism so that a second end of the flap member distal from the first end is movable between the first and second positions. The second end thereby describes an arcuate path between the first and second positions. The flap member may be operably connected to the input drive shaft at or near the second end of the flap member.

In an embodiment, the drive member may be operably connected to the input drive shaft via a pulley transmission or similar. The first end of the pulley transmission may be attached to the distal end of the drive member, which is furthest away from the drive members pivot. The second end of the pulley transmission may be attached to the submerged elements biasing arrangement. Between the first end and the second end of the pulley transmission, the input drive shaft is operably engaged, such that as the distance between the buoyant structure and the distal end of the submerged elements drive member increases, the associated movement of the pulley transmission causes the input drive shaft to rotate, and the biasing members tension increases. Conversely, as the distance between the buoyant structure and the distal end of the submerged elements drive member decreases, the potential energy stored in the biasing member from the drive members movement between the first position and the second position causes the pulley transmission to rotate the input drive shaft in the opposite direction and move the drive member back to the first position from the second position.

In another embodiment, the generator drive mechanism may be attached to the upper surface of the drive member and operably connected to the input drive shaft via a pulley transmission and pulley before re-attaching to the bottom surface of the drive member. Spliced inline to the pulley transmission is a spring system which accommodates the different tensile forces the belt is exposed to whilst the drive member sweeps from the first position to the second position and vice versa.

Conveniently, in all embodiments, as the drive member moves from the first position to the second position, the hydrodynamic drag and the forces acting on the tether between the submerged element and the buoyant structure decreases, which is favourable in highly energetic and/or destructive sea states. Conversely, as the drive member moves from the second position to the first position, the drag on the submerged element decreases, which reduces the requirement for a counterweight to offset the drag generated by the drive member. Thus, the submerged element has an inbuilt survivability failsafe built into the operating principle, whilst still enabling energy absorption and conversion to continue.

The invention is distinctly characterised in that the drive member is not anchored to an anchoring point that is fixed relative to the bed of the body of water on which the buoyant structure is deployed, whether by tethering the drive member directly to the bed of by tethering the drive member to an anchor that is configured to reside in a stable plane submerged beneath the water. Instead, the drive member of the invention is operably connected to the input drive shaft via the generator drive mechanism and actuated by hydrodynamic forces. Thereby, when the buoyant structure encounters a wave crest, the spacing between the buoyant structure and the submerged distal end of the drive member increases and the drive member is hydro dynamically forced towards the second position causing the input drive shaft, which is operably connected to the driver member, to rotate. Similarly, when the buoyant structure encounters a wave trough, the spacing between the buoyant structure and the distal end of the drive member decreases and the drive member is urged towards the first position by the biasing arrangement.

The submerged element is not configured to reside in a stable plane submerged beneath the surface of the body of water in which the converter is deployed. Rather, it is configured to move generally vertically in phase with the buoyant structure on the surface. However, the drive member, which is pivotably attached to the submerged element, is configured to move but in a less immediate damped manner relative to the buoyant structure. The submerged element is suspended below the buoyant structure and is tethered to the buoyant structure from any part of the submerged element, except the drive member. The submerged element is thus a structure capable of absorbing and converting wave energy into electrical energy via hydrodynamic forces, which are actuated by the buoyant structures response to the surface peak and troughs of waves.

The wave energy converter can be anchored in a number of configurations, none of which include anchoring the converter by the drive member. Should it be desired to anchor the wave energy converter of the invention into position, this may be done instead by mooring the buoyant structure itself to an anchoring point that is fixed relative to the bed of the body of water, for example by tethering the buoyant structure directly to the bed of the body of water via an anchor formation at the bed or by tethering the buoyant structure directly to an anchor formation that is configured to reside in a stable plane submerged beneath the water surface.

In an embodiment an anchor formation and anchor line may be provided, wherein the anchor formation is configured to seat in use at the bed of a body of water or to reside in use in a stable plane submerged beneath the surface of a body of water and wherein an anchor line attaches the anchor to the buoyant structure.

The anchor line may attach the buoyant structure directly to the anchor formation and optionally thereby to the bed of a body of water.

In a possible arrangement a plurality of anchor formations may be provided. For example each anchor formation may serve to anchor the buoyant structure via a corresponding anchor line. In a possible arrangement a plural array of radially positioned gravity anchor formations may be provided to which the buoyant structure is tethered via a catenary anchor line system.

In another possible arrangement, the converter may transversely slide over a singular anchor line suspended from buoyant structure wherein the anchor line is a continuous unbroken member from the buoyant structure on the surface of the body of water to the submerged anchor configuration on the bed of a body of water.

The buoyant structure is configured, in use, to float on the surface of a body of water. The submerged element is configured, in use, to be tethered below the surface of the water generally below the buoyant structure when the two structures are at rest. In use, as a buoyant structure encounters a wave it tends generally to move up and down relative to its rest position. The submerged element connected via the tether is configured to respond in phase, whilst the drive member pivotably attached to the submerged element responds in a damped manner and thus moves correspondingly up and down relative to its at rest position but out of phase with the floating buoyant structure.

In consequence herein, features of shape or configuration or relative position of components of the converter, and especially of the submerged element, may be described with reference to this at rest position and reciprocating general up and down motion, but these should be seen as for convenience only and not implying a limitation to a specific mode of use.

The buoyant structure is preferably shaped to define a stable default upright configuration. The buoyant structure is preferably shaped to be self-righting to such stable default upright configuration.

The buoyant structure may comprise material less dense than water. Additionally or alternatively, the buoyant structure may comprise a hollow walled structure defining one or more cells for example being gas filled cells or foam filled cells.

The submerged element structure preferably has a very small surface area in the plane parallel to the bed of the body of water. However, the drive member or drive members associated with the submerged element preferably have a large surface area in the plane parallel to the bed of the body of water, in order to create hydrodynamic drag to ultimately rotate the generator shaft.

The drive member's shape is preferably elongate in two dimensions, both wide and long, to create a flap shape and for example a rectangular flap shape which is preferable in order to optimise hydrodynamic drag, whilst the depth of the member is relatively thin in comparison to reduce unnecessary weight. The drive member preferably has a shape which provides greater surface area and/or greater hydrodynamic drag at the distal end or edge, being the end or edge which is furthest away from the drive member's pivot. The surface profile of the drive member is designed to produce the optimal hydrodynamic drag characteristics and as such is not of uniform shape or smoothness. The drive member may also comprise of materials less dense than water and flexible in structure.

In a typical arrangement a pair of drive members such as a pair of flaps may be articulated about a mid line. In this context, a length of a drive member will be understood to be the distance whereby the drive member projects outwardly of the mid line and the width will be understood to be distance whereby the drive member projects in a direction parallel to the mid line. An elongate length is favoured to maximize leverage for higher amplitude waves, but a substantial width is particularly adapted to give effective drag for lower amplitude waves. Preferably this provides a substantial surface area in two dimensions.

A preferred ratio of width to length, for example of a rectangular flap drive member, might be between 3:2 and 3:1 and for example about 2:1.

A distance between the drive member and the buoyant structure should be at least 1.5 times a drive member length.

A distance between the submerged element and the buoyant structure should be at least 1.5 times an anticipated wave height. For example for operation in 10m waves a distance between the submerged element and the buoyant structure should be at least 15m.

The submerged element's drive member comprises two hydrodynamic surfaces, an upper and a lower. The upper hydrodynamic surface and the lower hydrodynamic surface both have optimal shapes for hydrodynamic drag generation. Both the upper and the lower surfaces of the drive member are generally concave. Preferably, the majority of the concave surface is achieved towards the distal end or edge of the drive member, which is furthest away from the drive member's pivot.

The drive member is provided with a biasing arrangement to act on the drive member to tend to urge the drive member towards the first position, which thus defines a default, unloaded position. In use as the buoyant structure floating on the water surface encounters a wave crest, the spacing between the buoyant structure and distal end of the submerged elements drive member increases and the drive member is hydro dynamically forced towards the second position by the hydrodynamic drag acting on the drive member. As the relative upward movement of the buoyant structure decreases, the hydrodynamic drag acting on the drive member decreases and the buoyant structure encounters a trough, the spacing between the buoyant structure and the distal end of the submerged elements drive member decreases and the drive member is urged back towards the default first position by the biasing arrangement.

In addition to the biasing arrangement urging the drive member towards the first position, the biasing arrangement also retracts the generator drive mechanism, which is operably connected to the input drive shaft.

The biasing arrangement may comprise a spring or any like means suitable for exerting a bias force on the drive member. The spring may be a coil spring, a compression spring, an extension spring, an elastomeric spring, or another type of spring.

The drive member is thus for example spring biased, but other biasing mechanisms, such as hydraulic mechanisms, electrical and electrometrical mechanisms and the like, might also be considered.

In accordance with the invention a generator on the submerged element is provided with at least one drive member. In a preferred case a plurality of drive members are provided. For example plural drive members are carried on the submerged element's structure, for example arrayed around a notional centre point for example defined by a central column of the submerged element's structure.

Each drive member is operably connected to the input drive shaft of a generator via a generator drive mechanism for example having a transmission drive element, a biasing element, a pulley, and a rotational input drive shaft. Plural drive members may be operably connected to a common generator drive mechanism. Alternatively, each drive member may be operably connected to a respective generator drive mechanism. Each drive member is operably connected to the input drive shaft using for example a pulley transmission drive.

It is important to note that in a typical arrangement comprising articulated flaps the generator drive mechanism does not extract movement from the pivot hinge of the flaps but from a distal edge.

The converter of the invention comprises at least one generator drive mechanism associated with a generator, the generator drive mechanism for example having a pulley transmission drive element, a biasing element, a pulley, and a rotational input drive shaft. The drive mechanism may comprise at least one clutch so that only rotation of the input drive shaft in on direction is transmitted to the generator shaft. Rotation of the input drive shaft in both directions may be transmitted to the generator shaft, but may be less efficient. The generator drive mechanism may also comprise a gearing arrangement or chain drive or belt drive and or a flywheel.

Alternatively, the drive mechanism may compromise a direct drive mechanism where the input drive shaft is coupled directly to the generator shaft. For example a magnetic coupling may be used.

Alternatively, the drive mechanism may compromise a hydraulic drive.

Preferably the drive mechanism is thereby incorporated into the generator in enclosed manner without need for shaft seals.

Preferably the converter comprises multiple generators, each generator having an associated generator drive mechanism, each generator drive mechanism having a transmission drive element, a biasing element, a pulley, and a rotational input drive shaft, wherein a drive member is operably connected to each input drive shaft. In a possible embodiment, for example, the converter comprises two to four generators. Where the converter comprises multiple generators and/or multiple drive members these are conveniently generally evenly disposed, and for example circumferentially arrayed around the submerged elements structure. The submerged element may comprise a fin or member comprising a large surface area on the structure to minimise the tendency of the converter to rotate. This may be done by attaching a fin to one side of the submerged element which is perpendicular to the body of waters bed.

A power take off cable for carrying the electricity away from the generator may exit the submerged structure. Conveniently, the power take off cable may be incorporated with the tether between the submerged element and the buoyant structure, for example being coupled to a tether line such as to provide support from line weight and current forces.

Alternatively, the power take off cable may exit away from the generator towards the bed of the body of water where it may connect to a substation for distribution via a singular larger cable back to a power demanding location.

When transporting and deploying the converter, the submerged element is capable of being disassembled. The submerged elements structure is capable of being disassembled and the drive members are capable of being completely removed to reduce transportation space.

Another possible arrangement may include a submerged element which requires no disassembly of components, but is capable of folding. Once folded the submerged element may generally take the form of an elongated shape, which is easier to transport.

The buoyant structure may compromise an access hatch which provides access into the buoyant structure for maintenance, adjustment, repairs etc. the buoyant structure may be any suitable shape.

The converter may further comprise at least one additional generating system such as a solar array or wind turbine. In addition to wave energy, the converter may convert solar and/or wind energy.

The wave energy converter comprises a buoyant structure which, in use, floats on water; and a submerged element tethered to the buoyant structure which, in use, moves below the surface of the water in phase with the floating structure. The submerged element's structure is configured to respond to the movement of the buoyant structure as it moves. The submerged element's drive members are configured to absorb the movement of the buoyant structure and thus move in a damped manner relative to the buoyant structure.

Embodiments of the disclosure will now be described, by way of example only, with reference to the following drawings, in which:
Figure 1 is a side view of an embodiment of a wave energy converter showing dual catenary mooring chain lines;
Figure 2 is a side view of an embodiment of a wave energy converter showing a single catenary mooring chain line;
Figure 3 is a perspective view of the submerged wave energy converter element with the drive members in a resting position. Includes a length of mooring chain line for reference;
Figure 4 is a perspective view of the submerged wave energy converter element with the drive members in a first position. Includes a length of mooring chain line for reference;
Figure 5 is a perspective view of the submerged wave energy converter element with the drive members in a second position. Includes a length of mooring chain line for reference;
Figure 6 is a perspective view of the submerged wave energy converter element with the drive members in a resting position. Showing the transverse direction for positioning on the mooring chain line;
Figure 7 is a perspective view of the submerged wave energy converter element with the drive members in a resting position and the operably connected transmission drive connecting to the upper face of the drive members and the lower face of the drive members;
Figure 8 is a perspective view of the generator drive mechanism in an at rest position;
Figure 9 is a perspective view of the generator drive mechanism in a first position;
Figure 10 is a perspective view of the generator drive mechanism in a second position;
Figure 11 is a perspective view of an embodiment of a hydro dynamically optimised drive member;
Figure 12 is a perspective view of an embodiment of a hydro dynamically optimised drive member;
Figure 13 is a perspective view of an embodiment of a hydro dynamically optimised drive member.

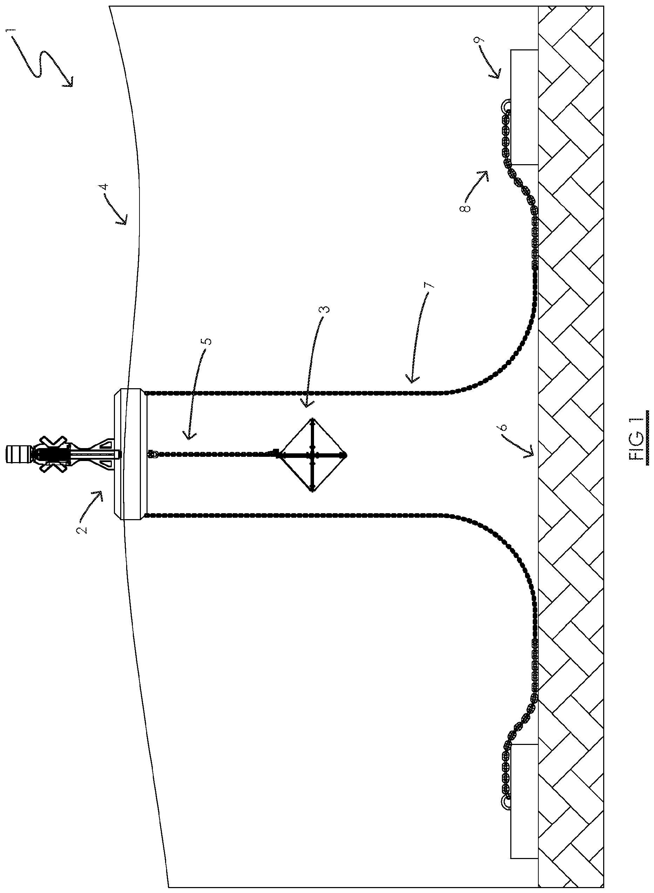

With reference to Figure 1, a mooring embodiment of a wave energy converter indicated generally at 1 comprises a buoyant structure 2, and a submerged wave energy converter element 3. The submerged wave energy converter element 3 is shown in the in-use configuration with the buoyant structure 2 floating on the body of water 4, and the submerged wave energy converter element 3 below the surface of the body of water.

The buoyant structure 2 is tethered 5 to the submerged wave energy converter element 3. As a result, the submerged wave energy converter 3 is enabled to move in phase with the buoyant structure 2 which moves generally up and down with the surface of the water 4. The buoyant structure 2 is tethered to the seabed 6 via a mooring chain line 7, a ground anchor chain 8, and a mooring block 9. Figure 1 depicts a mooring block 9 of a gravity anchor type, however, other types of anchor blocks can be used to achieve the same purpose.

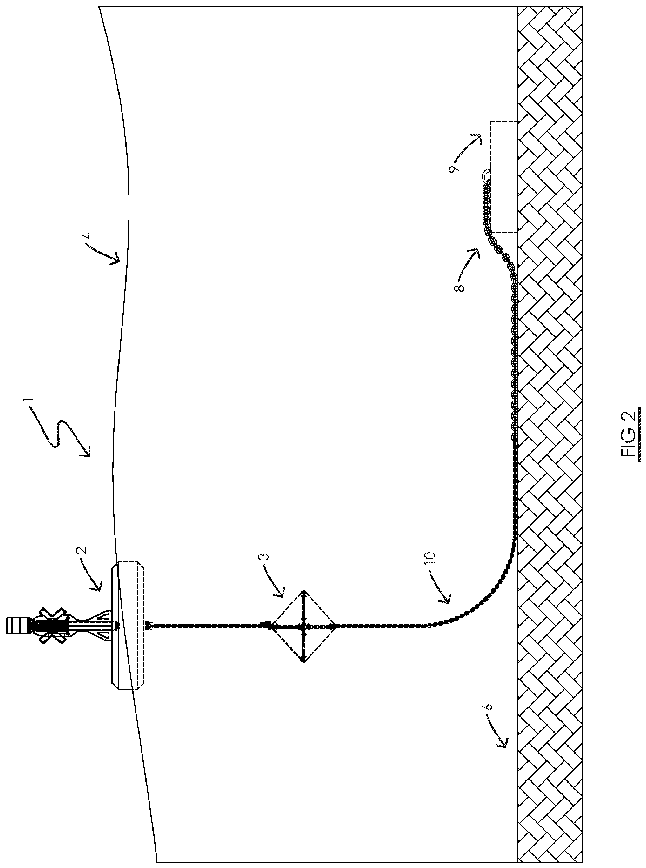

Figure 2 shows a mooring embodiment of a wave energy converter indicated generally at 1 which comprises a buoyant structure 2, a submerged wave energy converter element 3, and a mooring riser chain line 10. This embodiment depicts how the submerged wave energy converter element 3 can retrofit onto existing mooring riser chain lines 10, without breaking the chain or creating multiple elements of chain. The mooring riser chain 10 is coupled to a ground anchor chain 8, and a mooring block 9, which is positioned on the seabed 6.

The buoyant structure 2 is shown as a flat cylinder (that is, as a cylinder with a vertical cylinder axis and a cylinder height substantially less than a diameter. This should not be seen as the only or best arrangement. A possible embodiment might instead use a buoyant structure comprising an elongate cylinder with the cylinder axis disposed horizontally in use, and for example disposed horizontally in use generally transverse to a wave direction. Other shapes may be optimised for other scenarios.

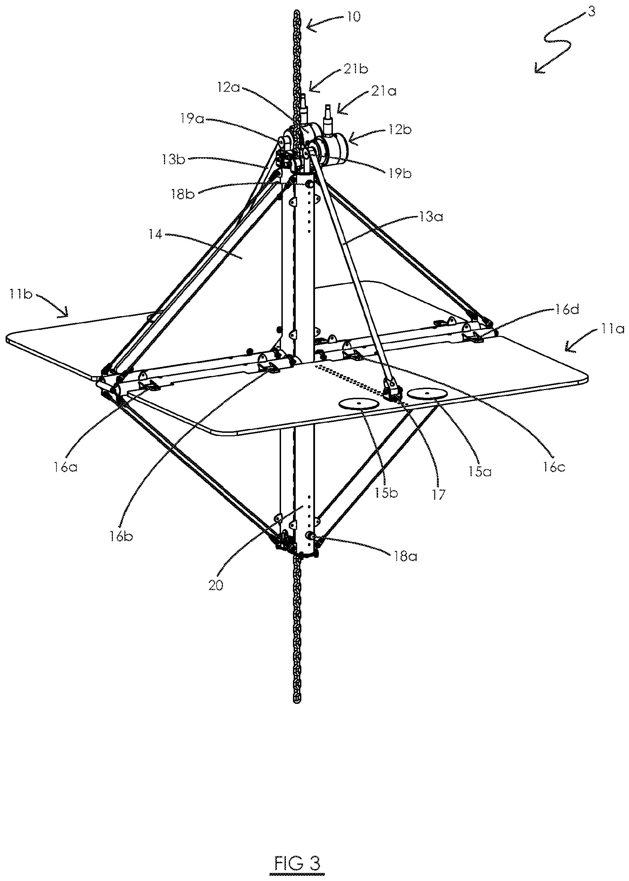

Figure 3 shows a submerged wave energy converter element 3 attached to a reference of mooring riser chain 10. There are two drive members referenced generally as 11 where the two are individually distinguished respectively as 11a, and 11b. The drive members 11 are shown in their at rest position pivoting about their hinges, which are referenced generally as 16, where the four visible hinge pivots are distinguished respectively as 16a, 16b, 16c, and 16d. Although it cannot be easily seen, each drive member 11 has hinges 16 that attach the drive member 11 to the wave energy converter elements structure 20. The ballast weights 15a and 15b can be seen attached to the drive member 11 for fine tuning of the at rest position, which is generally parallel to bed 6 of the body of water 4.

The drive members 11 are operably connected to the input drive shafts which are referenced generally as 19 and individually distinguished as 19a and 19b. The transmission, shown in Figure 3 as pulley belts 13a and 13b are fixed to the drive member 11 via a drive member pivot 17 which can pivot about its axis to ensure longevity of the pulley belt 13. The pulley belt 13 engages with the input drive shaft 19 and the associated traction causes the input drive shafts to the generators 12a and 12b to rotate. From out of the generators 12a and 12b, the power cables 21a and 21b exit and can be coupled to the riser chain 10 up to the buoyant structure 2, or down towards the seabed 6. Bumper stops 18a and 18b provide a sacrificial wear solution in the event of the drive member 11 making contact with the wave energy converter elements structure 20. The directional fin 14 is fastened to the wave energy converter elements structure 20 and ensures that the submerged wave energy converter element 3 does not rotate around the riser chain 10 in tidal currents or extreme wave scenarios.

It can be seen that the generators in figure 3 constitute a mass above the pivot line which is offset from a central vertical axis of the convertor. In a preferred case, although not shown in the figure, a counterbalancing mass may be provided below the pivot line which may have a counterbalancing offset from a central axis of the convertor.

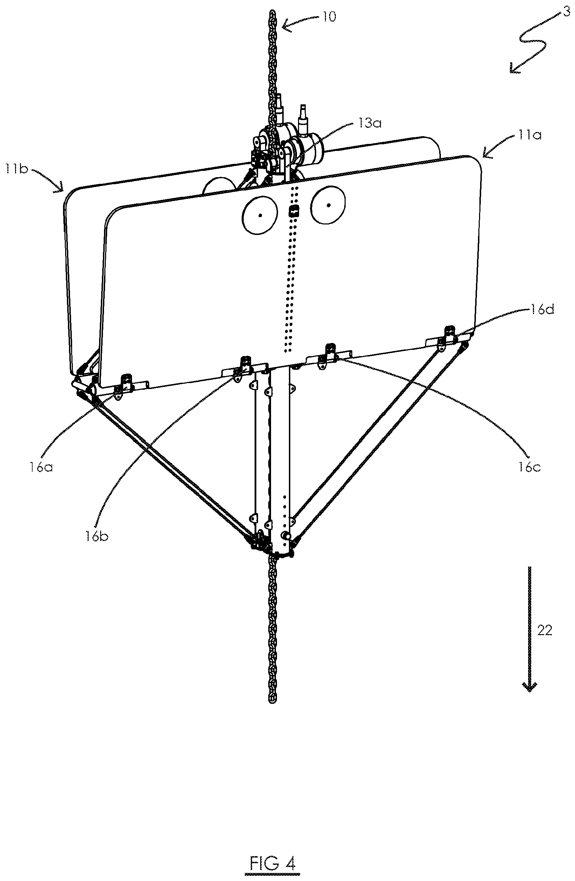

Figure 4 depicts the submerged wave energy converter element 3 with reference riser chain 10 in the first position with the drive members 11a and 11b distal ends, which are furthest from the pivot hinge 16, generally pointing upwards, or furthest away from the seabed 6. The configuration shown here is a mechanical snapshot of a cyclical process. It is clear to see that in this first position the pulley belts 13 have protruded out of the wave energy converter elements structure 20 less than in Figure 3. Figure 4 depicts the submerged wave energy converter element 3 descending 22 in the water column and as such the drive members 11a and 11b have been hydro dynamically forced upwards, due to the relative weight of the wave energy converter elements structure 20, the weight of the riser chain 10, and the potential retraction force stored in the biasing spring 29.

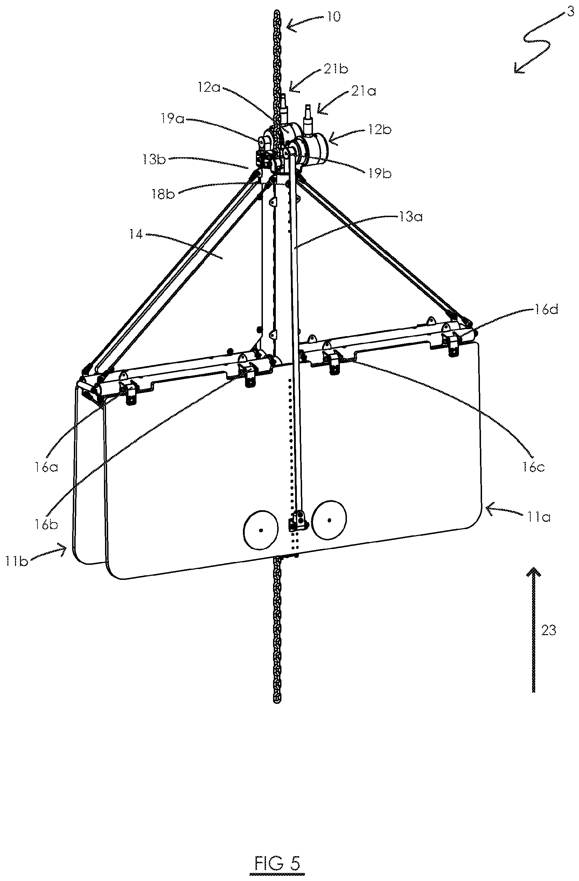

Figure 5 depicts the submerged wave energy converter element 3 with reference riser chain 10 in the second position with the drive members 11a and 11b distal ends, which are furthest from the pivot hinge 16, generally pointing downwards, or closest to the seabed 6. It is clear to see that the pulley belts 13 have protruded out of the wave energy converter elements structure 20 more than in Figure 3 and Figure 4. The extra length of pulley belt 13 which has protruded from the wave energy converter elements structure 20 suggests that the input drive shafts 19 have rotated a certain number of revolutions, due to the traction between the pulley belt 13 and the input drive shaft 19. Figure 5 shows the position the submerged wave energy converter element 3 would adopt when ascending 23 in the water column, due to the force of the buoyant structure 2 generally moving upwards.

The cyclical process of the submerged wave energy converter element 3 ascending 23 and descending 22 in the water column can be understood by observing the different positions of the drive members 11 and the different pulley belt 13 lengths in Figure 3, Figure 4, Figure 3, Figure 5, Figure 3 in that exact sequence. Following the sequence it is clear that the pulley belt 13 length extends and retracts from the wave energy converter elements structure 20 and as a result rotates the input drive shafts 19 clockwise and anticlockwise in the descending 22 and ascending 23 directions repeatedly.

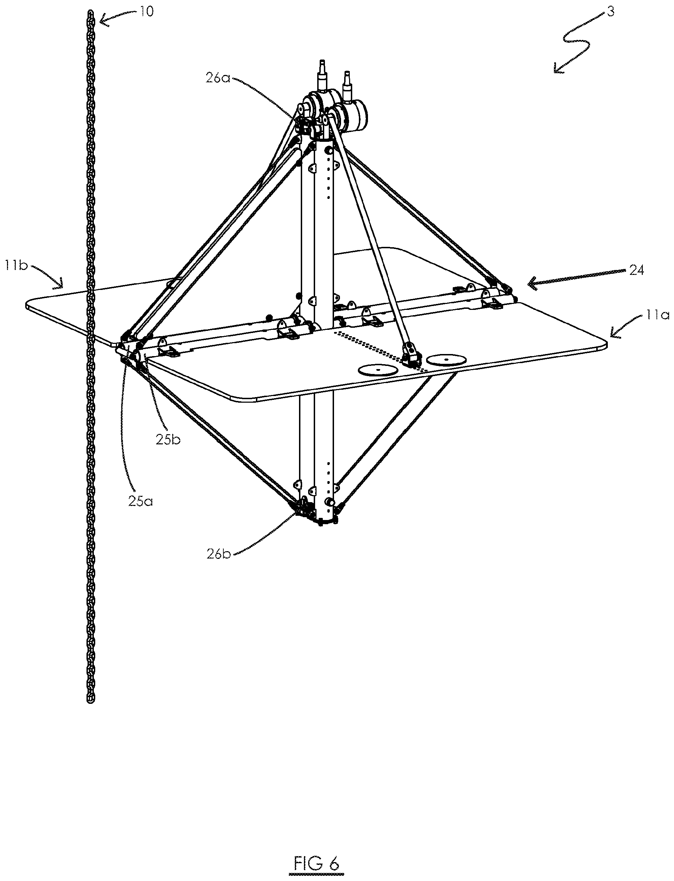

Figure 6 shows how the submerged wave energy converter element 3 fits onto existing mooring line chains 10 depicted in Figure 6 by a reference section of riser chain 10. The submerged wave energy converter element 3 slides transversely 24 across the riser chain 10, with the riser chain 10 sliding between the drive members 11a and 11b support beams 25a and 25b. The submerged wave energy converter element 3 is then fixed onto the riser chain 10 via shackle pins 26a and 26b. Once attached, the submerged wave energy converter element 3 is integral to the riser chain 10 assembly and as such moves in phase with the buoyant structure 2.

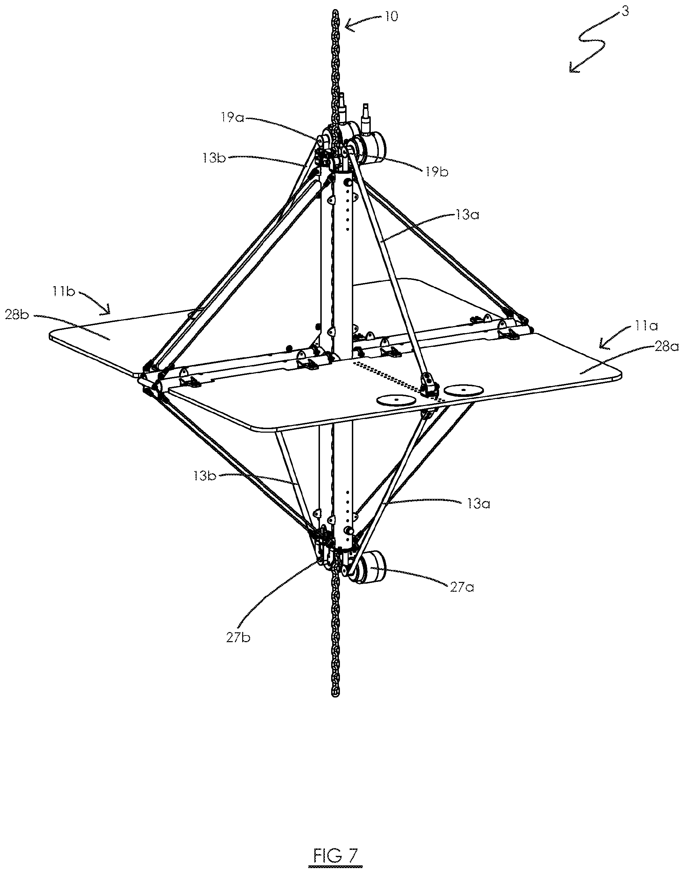

Figure 7 depicts an embodiment whereby the submerged wave energy converter element 3 has a pulley belt 13, which is attached to the surfaces of drive members 11a and 11b top 28a and 28b and bottom surface (where the bottom is on the opposite side to 28a's and 28b's surface). In this embodiment, the individual pulley belts 13 are engaged in two separate places. One being the input drive shaft 19a and 19b and the other being the bottom pulley 27a and 27b. Spliced inline with the pulley belt 13 and housed within the wave energy converter elements structure 20 is a spring element 29, which accounts for the difference in tension on the pulley belt 13 when the drive members 11a 11b move from the first position to the second position, and vice versa.

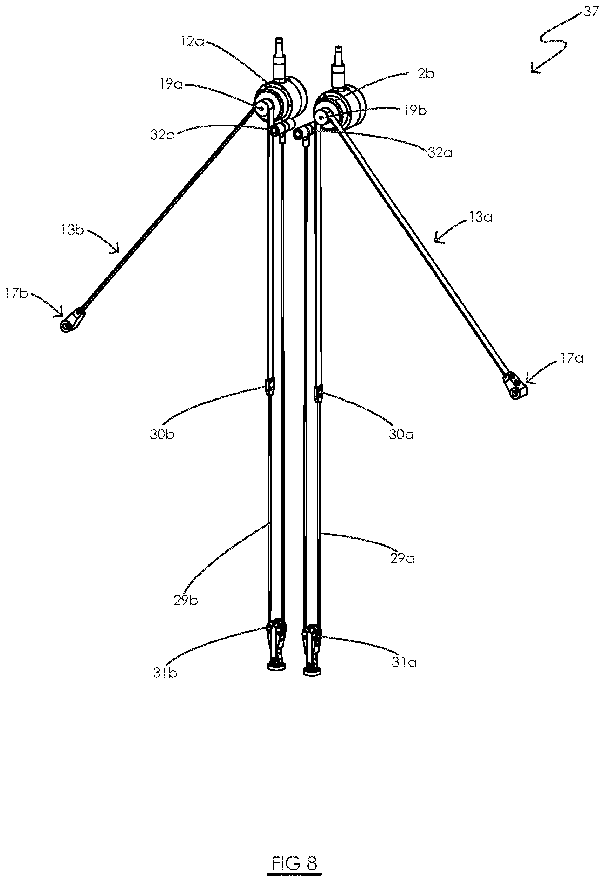

Figure 8 is an assembly drawing of the generator drive mechanism 37 arrangement only. The wave energy converter elements structure 20 has been removed for ease of explanation. Figure 8 shows the biasing arrangement in an at rest position, which is confirmed by the position of the drive member pivots 17a and 17b. At rest, the pulley belts 13a and 13b are extended out from the wave energy converter elements structure 20 up to approximately half their working length. Both pulley belts 13a and 13b are coupled to a spring element 29 (where individually distinguished, respectively as 29a and 29b) via separate joining assemblies 30 (where individually distinguished, respectively as 30a and 30b). Each spring element 29 engages with a separate pulley block 31 (where individually distinguished, respectively as 31a and 31b) to enable the pulley belt 13 to extend from the drive members 11a and 11b's first position to second position whilst still providing working room for the spring elements 29 to act as a biasing arrangement.

Each individual pulley belt 13 is attached independently to the drive members 11 via a separate drive member pivot 17 before engaging with the input drive shaft 19. After engaging with the input drive shaft 19, the pulley belt 13 extends down to the joining assembly 30, where the spring element 29 is coupled to the pulley belt 13. The spring element 29 continues downwards to loop around a pulley 31 before fastening generally at the top of the wave energy converter elements structure 20 at the spring element termination 32 (where individually distinguished, respectively as 32a and 32b).

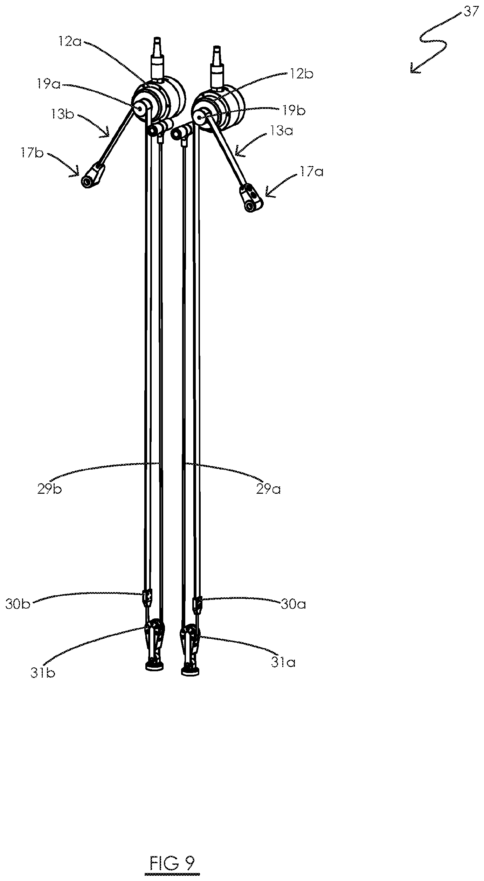

Figure 9 depicts the generator drive mechanism 37 arrangement of the submerged wave energy converter element 3 in a first position, which is confirmed by the position of the drive member pivots 17. In a first position, the pulley belt 13 has extended only a short distance from the wave energy converter elements structure 20, whilst the joining assembly 30 is much closer to the pulley 31 and the spring element 29 is in a retracted position.

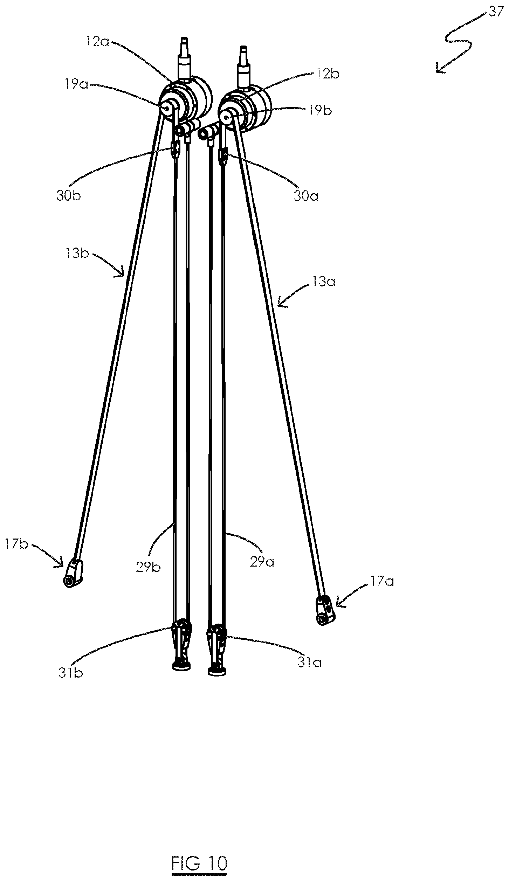

Figure 10 depicts the generator drive mechanism 37 arrangement of the submerged wave energy converter element 3 in a second position, which is confirmed by the position of the drive member pivots 17. In a second position, the pulley belt 13 has fully extended out of the wave energy converter elements structure 20, whilst the joining assembly 30 is much closer to the spring element termination 32 point and the spring element 29 is in a fully extended position.

As the drive members 11a and 11b move between a first position and a second position and back to a first position, the biasing arrangement moves between the positions depicted in Figure 9, Figure 8, Figure 10, Figure 8, and Figure 9. This movement is cyclically repeated and is directly related to the buoyant structures 2 position on the surface of the body of water 4.

Throughout the cyclical motion, the pulley belt 13 engages with and causes the input drive shaft 19 to rotate, which is subsequently coupled to the individual generators 12. The extent to how much the input drive shaft 19 rotates depends on the current sea state and the movement of the drive members 11 between the first and second positions and vice versa. This motion that the submerged wave energy converter element is exposed to absorbs energy and converts the wave energy into electrical energy via the rotational movement of the generators 12, which are fixed to the submerged wave energy converter element 3.

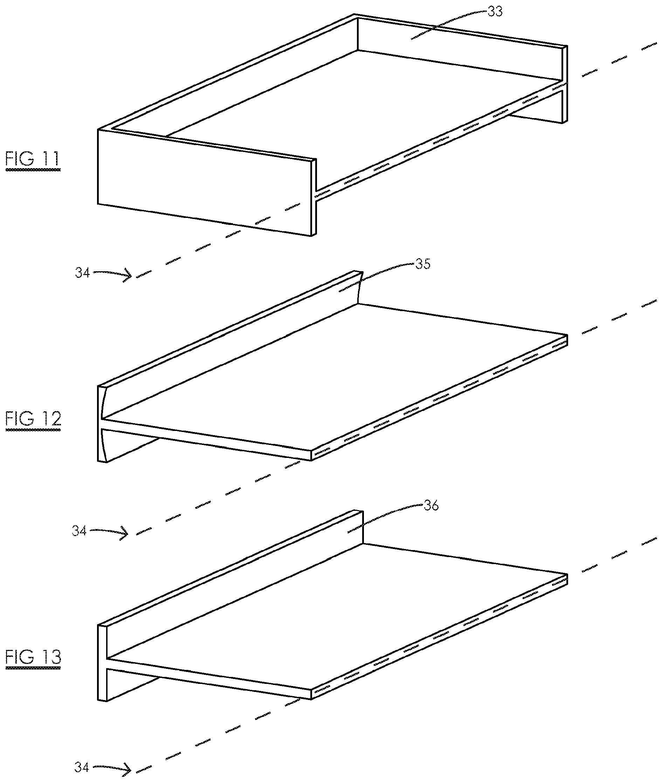

Figures 11, 12, and 13 depict potential embodiments of hydro dynamically optimised drive members 11. The pivoting axis 34 is the same on all embodiments depicted in Figure 11, 12, and 13 and if joined to the submerged wave energy converter element 3, would pivot about the hinge pivots 16.

Figure 11 shows a potential drive member 11, where the three side walls 33 extend above and below the pivot axis. Figure 12 depicts a drive member 11, where the distal side wall (which is furthest away from the pivot axis) is extended above and below the pivot axis. The extended wall 35 of Figure 12 also exhibits a concave curvature. Figure 13 depicts a potential driver member 11, where the distal side wall 36 (which is furthest away from the pivot axis) is extended perpendicularly above and below the pivot axis.

## Claims

1. A wave energy converter (1) comprising:
a buoyant structure (2) which, in use, floats on water;
a submerged element (3) tethered to the buoyant structure (2) such that, in use, it is submerged and moves in phase with the buoyant structure;
the submerged element comprising a generator (12);
the submerged element comprising a generator drive mechanism, the generator drive mechanism comprising a transmission drive and a rotational input shaft;
the submerged element comprising at least one drive member (11) operably connected to the input drive shaft (19), via the generator drive mechanism, the drive member (11) being moveable back and forth between a first position and a second position;
the submerged element (3) comprising at least one biasing element (29) acting on the drive member and connected to the generator drive mechanism;
wherein the generator is configured such that a back and forth movement of the drive member between the first and second positions drives the generator;
**characterised in that**:
the converter is configured in such manner that, during use with the converter deployed in a body of water (4) in a hydrodynamically unloaded condition with the buoyant structure (2) and the submerged element (3) relatively at rest, the drive member(s) (11) are positioned generally parallel to the bed (6) of the body of water (4); and **in that**:
each drive member (11) is elongate in two dimensions and has one elongate edge pivoting about the submerged element structure and pivotably moveable between the first and second positions around an axis which is, or is parallel to, the rotational axis of the input drive shaft.

2. A converter as claimed in claim 1 wherein the generator is configured such that a back and forth movement of the drive member (11) between the first and second positions causes the generator drive mechanism to engage and rotate the input shaft (19) and, thereby, causes a coupled generator shaft to rotate.

3. A converter as claimed in claim 1 or 2 wherein, in use, when the buoyant structure (2) encounters a wave crest, the spacing between the buoyant structure and the distal end of the drive member (11) increases and the drive member is hydro dynamically forced towards the second position, and, when the buoyant structure encounters a wave trough, the spacing between the buoyant structure and the distal end of the drive member (11) decreases and the drive member is urged towards the first position by the biasing element (19); and,
wherein the back and forth movement of the drive member between the first and second positions causes the generator drive mechanism to rotate the input drive shaft (19), thereby, causing a generator shaft to rotate.

4. A converter as claimed in any preceding claim, wherein the drive member (11) is a flap member extending from a first end at which the member is pivotable around the said axis so that a second end of the flap distal from the first end is movable between the first and second positions as the first end pivots around the said axis.

5. A converter as claimed in any preceding claim, wherein the drive member (11) is operably attached to the input drive shaft (19) such as to pivotably move in use but out of phase with the buoyant structure (2) floating on the surface of the water.

6. A converter as claimed in any preceding claim comprising a pair of symmetrically disposed flaps (11a, 11b).

7. A converter as claimed in any preceding claim wherein the submerged element (3) is a hydrodynamic absorber comprising pivotably movable drive members configured to act with the buoyant structure (2) to absorb its response to a surface peak or trough in use.

8. A converter as claimed in any preceding claim, comprising a plurality of drive members (11) of congruent shape, that together define a complete hydrodynamic absorber shape plate formation.

9. A converter as claimed in any preceding claim, wherein the buoyant structure (2) is attached directly to an anchor (8, 9) by an anchor line (7).

10. A converter as claimed in any preceding claim, wherein the submerged element (3) is configured to be tethered to a continuous length of anchor line extending from the buoyant structure to the anchor without breaking the anchor line into multiple elements.

11. A converter as claimed in any preceding claim, wherein the submerged element (3) has a fin (14) to one side of the submerged element to minimise the tendency of the submerged element to rotate.

12. A converter as claimed in any preceding claim, wherein the biasing element (29) comprises a spring such as a coil spring, a compression spring, an elastomeric spring, or an extension spring.

13. A converter as claimed in any preceding claim, wherein the generator drive mechanism is a hydraulic drive, or a pneumatic drive.

14. A converter as claimed in any preceding claim, comprising multiple generators (12a, 12b), each generator having a generator drive mechanism, each generator drive mechanism being operably connected to an input drive shaft (19a, 19b).

15. A converter as claimed in any preceding claim, wherein the generator drive mechanism is comprised of at least one transmission drive element, at least one pulley, and at least one biasing element.

## Patentansprüche

1. Ein Wellenenergiewandler (1), der Folgendes beinhaltet:
eine schwimmfähige Struktur (2), die bei Verwendung auf Wasser treibt;
ein untergetauchtes Element (3), das an die schwimmfähige Struktur (2) gebunden ist, sodass es bei Verwendung untergetaucht ist und sich im Einklang mit der schwimmfähigen Struktur bewegt;
wobei das untergetauchte Element einen Generator (12) beinhaltet;
wobei das untergetauchte Element einen Generatorantriebsmechanismus beinhaltet, wobei der Generatorantriebsmechanismus einen Transmissionsantrieb und eine Eingangsdrehwelle beinhaltet;
wobei das untergetauchte Element mindestens ein Antriebsbauteil (11) beinhaltet, das mit der Eingangsantriebswelle (19) über den Generatorantriebsmechanismus betriebsbereit verbunden ist, wobei das Antriebsbauteil (11) zwischen einer ersten Position und einer zweiten Position hin- und herbewegbar ist;
wobei das untergetauchte Element (3) mindestens ein Vorspannelement (29) beinhaltet, das auf das Antriebsbauteil wirkt und mit dem Generatorantriebsmechanismus verbunden ist;
wobei der Generator so konfiguriert ist, dass eine Hin- und Herbewegung des Antriebsbauteils zwischen der ersten und der zweiten Position den Generator antreibt; **dadurch gekennzeichnet, dass**:
der Wandler auf solche Art konfiguriert ist, dass bei Verwendung, wenn der Wandler in einem Wasserkörper (4) in einem hydrodynamisch ungeladenen Zustand eingesetzt ist, wenn die schwimmfähige Struktur (2) und das untergetauchte Element (3) relativ ruhend sind, das/die Antriebsbauteil(e) (11) im Allgemeinen parallel zu dem Boden (6) des Wasserkörpers (4) positioniert sind; und dass:
jedes Antriebsbauteil (11) in zwei Dimensionen länglich ist und eine längliche Kante aufweist, die um die Struktur des untergetauchten Elements schwenkt und zwischen der ersten und der zweiten Position um eine Achse, die die Rotationsachse der Eingangsantriebswelle ist oder parallel dazu ist, schwenkbar bewegbar ist.

2. Wandler gemäß Anspruch 1, wobei der Generator so konfiguriert ist, dass eine Hin- und Herbewegung des Antriebsbauteils (11) zwischen der ersten und der zweiten Position den Generatorantriebsmechanismus veranlasst, in die Eingangswelle (19) einzugreifen und sie zu drehen, und dadurch eine gekoppelte Generatorwelle veranlasst, sich zu drehen.

3. Wandler gemäß Anspruch 1 oder 2, wobei sich bei Verwendung, wenn die schwimmfähige Struktur (2) auf einen Wellenscheitel trifft, die Beabstandung zwischen der schwimmfähigen Struktur und dem distalen Ende des Antriebsbauteils (11) erhöht und das Antriebsbauteil hydrodynamisch in Richtung der zweiten Position gedrängt wird und sich, wenn die schwimmfähige Struktur auf ein Wellental trifft, die Beabstandung zwischen der schwimmfähigen Struktur und dem distalen Ende des Antriebsbauteils (11) verringert und das Antriebsbauteil von dem Vorspannelement (19) in Richtung der ersten Position gedrängt wird; und
wobei die Hin- und Herbewegung des Antriebsbauteils zwischen der ersten und der zweiten Position den Generatorantriebsmechanismus veranlasst, die Eingangsantriebswelle (19) zu drehen, wodurch eine Generatorwelle veranlasst wird, sich zu drehen.

4. Wandler gemäß einem der vorhergehenden Ansprüche, wobei das Antriebsbauteil (11) ein Klappenbauteil ist, das sich von einem ersten Ende erstreckt, an dem das Bauteil um die Achse schwenkbar ist, sodass ein zweites Ende der Klappe, das von dem ersten Ende distal ist, zwischen der ersten und der zweiten Position bewegbar ist, wenn das erste Ende um die Achse schwenkt.

5. Wandler gemäß einem der vorhergehenden Ansprüche, wobei das Antriebsbauteil (11) an der Eingangsantriebswelle (19) betriebsbereit angebracht ist, um sich bei Verwendung schwenkbar, aber nicht im Einklang mit der schwimmfähigen Struktur (2), die auf der Wasseroberfläche treibt, zu bewegen.

6. Wandler gemäß einem der vorhergehenden Ansprüche, der ein Paar symmetrisch angeordneter Klappen (11a, 11b) beinhaltet.

7. Wandler gemäß einem der vorhergehenden Ansprüche, wobei das untergetauchte Element (3) ein hydrodynamischer Absorber ist, der schwenkbar bewegliche Antriebsbauteile beinhaltet, die konfiguriert sind, um mit der schwimmfähigen Struktur (2) zu wirken, um ihre Reaktion auf einen Oberflächengipfel oder ein Oberflächental bei Verwendung zu absorbieren.

8. Wandler gemäß einem der vorhergehenden Ansprüche, der eine Vielzahl von Antriebsbauteilen (11) mit deckungsgleicher Form beinhaltet, die zusammen eine vollständige Formation in Form einer Platte eines hydrodynamischen Absorbers definieren.

9. Wandler gemäß einem der vorhergehenden Ansprüche, wobei die schwimmfähige Struktur (2) durch eine Ankerleine (7) direkt an einem Anker (8, 9) angebracht ist.

10. Wandler gemäß einem der vorhergehenden Ansprüche, wobei das untergetauchte Element (3) konfiguriert ist, um an eine durchgehende Länge von Ankerleine gebunden zu sein, die sich von der schwimmfähigen Struktur bis zu dem Anker erstreckt, ohne die Ankerleine in mehrere Elemente zu zerteilen.

11. Wandler gemäß einem der vorhergehenden Ansprüche, wobei das untergetauchte Element (3) ein Ruder (14) auf einer Seite des untergetauchten Elements aufweist, um die Tendenz des untergetauchten Elements, sich zu drehen, zu minimieren.

12. Wandler gemäß einem der vorhergehenden Ansprüche, wobei das Vorspannelement (29) eine Feder, wie etwa eine Spiralfeder, eine Druckfeder, eine Elastomerfeder oder eine Zugfeder, beinhaltet.

13. Wandler gemäß einem der vorhergehenden Ansprüche, wobei der Generatorantriebsmechanismus ein hydraulischer Antrieb oder ein pneumatischer Antrieb ist.

14. Wandler gemäß einem der vorhergehenden Ansprüche, der mehrere Generatoren (12a, 12b) beinhaltet, wobei jeder Generator einen Generatorantriebsmechanismus aufweist, wobei jeder Generatorantriebsmechanismus mit einer Eingangsantriebswelle (19a, 19b) betriebsbereit verbunden ist.

15. Wandler gemäß einem der vorhergehenden Ansprüche, wobei der Generatorantriebsmechanismus mindestens ein Transmissionsantriebselement, mindestens eine Rolle und mindestens ein Vorspannelement beinhaltet.

## Revendications

1. Un convertisseur d'énergie des vagues (1) comprenant :
une structure flottable (2) qui, lors de l'utilisation, flotte sur l'eau ;
un élément immergé (3) arrimé à la structure flottable (2) de telle sorte que, lors de l'utilisation, il soit immergé et se déplace en phase avec la structure flottable ;
l'élément immergé comprenant un générateur (12) ;
l'élément immergé comprenant un mécanisme d'entraînement de générateur, le mécanisme d'entraînement de générateur comprenant un entraînement de transmission et un arbre d'entrée rotatif ;
l'élément immergé comprenant au moins un élément d'entraînement (11) fonctionnellement raccordé à l'arbre d'entraînement d'entrée (19), par l'intermédiaire du mécanisme d'entraînement de générateur, l'élément d'entraînement (11) étant déplaçable vers l'avant et vers l'arrière entre une première position et une deuxième position ;
l'élément immergé (3) comprenant au moins un élément de sollicitation (29) agissant sur l'élément d'entraînement et raccordé au mécanisme d'entraînement de générateur ;
dans lequel le générateur est configuré de telle sorte qu'un déplacement vers l'avant et vers l'arrière de l'élément d'entraînement entre les première et deuxième positions entraîne le générateur ;
**caractérisé en ce que** :
le convertisseur est configuré d'une manière telle que, en cours d'utilisation avec le convertisseur déployé dans une masse d'eau (4) dans un état hydrodynamiquement non chargé avec la structure flottable (2) et l'élément immergé (3) relativement au repos, le ou les élément(s) d'entraînement (11) sont positionnés généralement parallèlement au lit (6) de la masse d'eau (4) ; et **en ce que** :
chaque élément d'entraînement (11) est allongé sur deux dimensions et a un bord allongé pivotant autour de la structure de l'élément immergé et déplaçable de façon à pouvoir pivoter entre les première et deuxième positions autour d'un axe qui est, ou est parallèle à, l'axe de rotation de l'arbre d'entraînement d'entrée.

2. Un convertisseur tel que revendiqué dans la revendication 1 dans lequel le générateur est configuré de telle sorte qu'un déplacement vers l'avant et vers l'arrière de l'élément d'entraînement (11) entre les première et deuxième positions amène le mécanisme d'entraînement de générateur à se mettre en prise avec et à faire tourner l'arbre d'entrée (19) et amène, de ce fait, un arbre de générateur couplé à tourner.

3. Un convertisseur tel que revendiqué dans la revendication 1 ou la revendication 2 dans lequel, lors de l'utilisation, lorsque la structure flottable (2) rencontre une crête de vague, l'espacement entre la structure flottable et l'extrémité distale de l'élément d'entraînement (11) augmente et l'élément d'entraînement est forcé hydrodynamiquement vers la deuxième position, et, lorsque la structure flottable rencontre un creux de vague, l'espacement entre la structure flottable et l'extrémité distale de l'élément d'entraînement (11) diminue et l'élément d'entraînement est poussé vers la première position par l'élément de sollicitation (19) ; et,
dans lequel le déplacement vers l'avant et vers l'arrière de l'élément d'entraînement entre les première et deuxième positions amène le mécanisme d'entraînement de générateur à faire tourner l'arbre d'entraînement d'entrée (19), amenant, de ce fait, un arbre de générateur à tourner.

4. Un convertisseur tel que revendiqué dans n'importe quelle revendication précédente, dans lequel l'élément d'entraînement (11) est un élément d'ailette s'étendant depuis une première extrémité au niveau de laquelle l'élément peut pivoter autour dudit axe de sorte qu'une deuxième extrémité de l'ailette distale de la première extrémité est déplaçable entre les première et deuxième positions à mesure que la première extrémité pivote autour dudit axe.

5. Un convertisseur tel que revendiqué dans n'importe quelle revendication précédente, dans lequel l'élément d'entraînement (11) est fonctionnellement attaché à l'arbre d'entraînement d'entrée (19) de telle sorte à se déplacer de façon à pouvoir pivoter lors de l'utilisation mais de façon déphasée avec la structure flottable (2) flottant à la surface de l'eau.

6. Un convertisseur tel que revendiqué dans n'importe quelle revendication précédente comprenant une paire d'ailettes disposées symétriquement (11a, 11b).

7. Un convertisseur tel que revendiqué dans n'importe quelle revendication précédente dans lequel l'élément immergé (3) est un absorbeur hydrodynamique comprenant des éléments d'entraînement déplaçables de façon à pouvoir pivoter configurés pour agir avec la structure flottable (2) afin d'absorber sa réponse à un sommet ou un creux de la surface lors de l'utilisation.

8. Un convertisseur tel que revendiqué dans n'importe quelle revendication précédente, comprenant une pluralité d'éléments d'entraînement (11) de forme congruente, lesquels composent ensemble une formation en forme de plaque d'absorbeur hydrodynamique complète.

9. Un convertisseur tel que revendiqué dans n'importe quelle revendication précédente, dans lequel la structure flottable (2) est attachée directement à une ancre (8, 9) par une ligne d'ancre (7).

10. Un convertisseur tel que revendiqué dans n'importe quelle revendication précédente, dans lequel l'élément immergé (3) est configuré afin d'être arrimé à une longueur continue de ligne d'ancre s'étendant de la structure flottable à l'ancre sans rompre la ligne d'ancre en de multiples éléments.

11. Un convertisseur tel que revendiqué dans n'importe quelle revendication précédente, dans lequel l'élément immergé (3) a un aileron (14) sur un côté de l'élément immergé afin de minimiser la tendance à tourner de l'élément immergé.

12. Un convertisseur tel que revendiqué dans n'importe quelle revendication précédente, dans lequel l'élément de sollicitation (29) comprend un ressort tel qu'un ressort hélicoïdal, un ressort de compression, un ressort élastomère, ou un ressort d'extension.

13. Un convertisseur tel que revendiqué dans n'importe quelle revendication précédente, dans lequel le mécanisme d'entraînement de générateur est un entraînement hydraulique, ou un entraînement pneumatique.

14. Un convertisseur tel que revendiqué dans n'importe quelle revendication précédente, comprenant de multiples générateurs (12a, 12b), chaque générateur ayant un mécanisme d'entraînement de générateur, chaque mécanisme d'entraînement de générateur étant fonctionnellement raccordé à un arbre d'entraînement d'entrée (19a, 19b).

15. Un convertisseur tel que revendiqué dans n'importe quelle revendication précédente, dans lequel le mécanisme d'entraînement de générateur est constitué d'au moins un élément d'entraînement de transmission, au moins une poulie, et au moins un élément de sollicitation.
